# EUROPÄISCHE PATENTANMELDUNG

(11) **EP 1 195 221 A1**
(43) Veröffentlichungstag der Anmeldung: **10.04.2002**
(21) Anmeldenummer: 01123535.5
(22) Anmeldetag: 28.09.2001
(51) Int. Cl.: B23Q 3/08

(54) **Verfahren zur Herstellung eines freiformflächigen Schmuckteiles**

(30) Priorität: 09.10.2000 AT 7472000 U
(71) Anmelder: Ebner Tec GmbH, 4400 Steyr (AT)
(72) Erfinder: Ebner, Wilibald, 4523 Neuzeug (DE)
(74) Vertreter: Schön, Theodor, Patent- und Zivilingenieur

(57) **Zusammenfassung**

Die vorliegende Erfindung betrifft ein Verfahren zur Herstellung eines freiformflächigen Schmuckteiles (2,2',2'',2''') aus einem metallischen Grundkörper (1) mittels Fräsverfahren, wobei der metallische Grundkörper (1) eingespannt wird und die gewünschte Form des Schmuckteiles (2,2',2'',2''') mittels Fräskopf soweit herausgearbeitet wird, dass mindestens eine Verbindung (4,4',4'') zum Grundkörper (1) erhalten bleibt. Der Schmuckteil (2,2',2'',2''') wird anschließend aus dem Grundkörper (1) ausgebracht und die getrennte Verbindung (4,4',4'') zum Grundkörper (1) wird in weiterer Folge mittels bekannter Maßnahmen entfernt. Besonders vorteilhaft wird die Erfindung eingesetzt, wenn der freiformflächige Körper (1) mittels CAD-CAM Programm konstruiert und die NC-Daten direkt von der Fräsmaschine übernommen werden.

## Beschreibung

Die vorliegende Erfindung betrifft ein Verfahren zur Herstellung eines freiformflächigen Schmuckteiles aus einem metallischen Grundkörper mittels einer Fräsmaschine.

Es ist bekannt metallische Schmuckteile aus einem Grundkörper mittels Fräsverfahrens herzustellen. Diese bekannten Verfahren sind jedoch nur dann einsetzbar, wenn der Schmuckteil ebene Flächen aufweist, welche ein Einspannen mit üblichen Spannvorrichtungen ermöglichen.

Sobald der Schmuckteil jedoch keine geeigneten ebenen Flächen aufweist, ist ein Einspannen wenn überhaupt nur mit unverhältnismäßig aufwendigen Einspannvorrichtungen möglich. Dies wird durch die geringen Abmessungen eines Schmuckteiles noch erheblich erschwert und erfordert gewöhnlich einen sehr hohen Aufwand an Rüstzeit.

Weiters weisen die bekannten Verfahren der gattungsgemäßen Art einen hohen Anteil an Abfallprodukt auf und führen demzufolge auch zu einem hohen Verbrauch an Verschleißteilen.

Die vorliegende Erfindung stellt sich daher die Aufgabe ein Herstellungsverfahren für freiformflächige Schmuckstücke zu schaffen, welches die Herstellung von metallischen Schmuckteilen durch Fräsung aus einem Grundkörper ermöglicht, wobei die Nachteile der bekannten Verfahren vermieden werden sollen.

Diese Aufgabe wird durch die im Anspruch 1 angegebenen Merkmale gelöst. Vorteilhafte Weiterbildungen oder zweckmäßige Ausgestaltungen sind in den Unteransprüchen angegeben.

Der metallische Grundkörper besteht aus einer Platte beliebiger Geometrie. Diese Platte wird in die Fräsmaschine eingespannt und die Konturen des freiformflächigen Schmuckteiles werden mit dem Fräskopf soweit aus dem Grundkörper herausgearbeitet, dass mindestens eine Verbindung zum Grundkörper erhalten bleibt. Anschließend wird der Grundkörper aus der Fräsmaschine herausgenommen, der Schmuckteil zum Beispiel durch Herausbrechen vom restlichen Grundkörper getrennt und die am Schmuckteil verbliebenen Reste der Verbindung mittels bekannten Verfahren beseitigt. Daran können bekannte Arten der Oberflächenbehandlung anschließen.

Der freiformflächige Schmuckteil wird in einer vorteilhaften Ausgestaltung der Erfindung mittels CAD-CAM Programm konstruiert, wobei die NC-Daten direkt von einer NC-Fräsmaschine übernommen werden. Dadurch wird es möglich, den Schmuckteil lediglich virtuell darzustellen, bevor er in die Produktion geht. Diese Form der Konstruktion ermöglicht es die Entwicklungskosten des Schmuckteiles erheblich zu reduzieren. Weiters wird damit ein hoher Grad an Flexibilität und Automation der Herstellung ermöglicht. Damit wird auch die Herstellung von Kleinstserien mit sehr geringem Entwicklungsaufwand erreicht.

Als besonders vorteilhaft hat es sich erwiesen, den Schmuckteil durch HSC-Fräsung aus dem Grundkörper herauszuarbeiten. Dieser Vorteil wird noch unterstützt, indem eine Emulsionskühlung, bevorzugt eine Minderschmiermengenkühlung beim Fräsvorgang eingesetzt wird.

Weiters bietet das erfindungsgemäße Herstellungsverfahren die Möglichkeit gleichzeitig aus demselben Grundkörper eine Vielzahl von Schmuckteilen herauszuarbeiten, wobei rechnergesteuert der Anfall von Abfallprodukt optimiert wird.

Durch das erfindungsgemäße Herstellungsverfahren wird es ermöglicht, die Menge an abzufräsendem Material aus dem Grundkörper weitestmöglich zu reduzieren, wodurch der Verbrauch an Verschleißteilen reduziert wird.

In einer besonders bevorzugten Ausführungsart des erfindungsgemäßen Verfahrens wird die Form des Schmuckteiles vorerst nur halbseitig aus dem Grundkörper herausgearbeitet, der Grundkörper wird anschließend um 180 ° gedreht und dann wird die zweite Halbseite herausgearbeitet.

Prinzipiell kann nach dem erfindungsgemäßen Verfahren jeder beliebige metallische Grundkörper verarbeitet werden. Für die Herstellung von Schmuckteilen aus Edelstahl hat es sich als vorteilhaft erwiesen, einen Grundkörper einzusetzen, welcher 0,14% Kohlenstoff, 0,40% Silizium, 1,40% Mangan, 0,30% Schwefel, 16% Crom und 0,25% Molybdän enthält. Diese Werte finden sich etwa im Böhler N310 Stahl wieder.

Es ist prinzipiell möglich die Fräsung dergestalt durchzuführen, dass lediglich eine Verbindung zwischen dem freiformflächigen Schmuckteil und dem Grundkörper verbleibt, wobei diese Verbindung aus Gründen der Stabilität dann als Wulst ausgebildet ist.

In einer bevorzugten Ausführungsform verbleiben jedoch mindestens zwei, optimalerweise aber drei oder mehr insbesondere stegartige Verbindungen zwischen dem Schmuckteil und dem Grundkörper. Dabei ist die Art der geometrischen Ausgestaltung der insbesondere stegartigen Verbindungen in großem Rahmen frei wählbar. Es ist lediglich erforderlich, dass diese Verbindungen eine ausreichen hohe Stabilität der Fixierung des Schmuckteiles innerhalb des Grundkörpers gewährleisten, wobei insbesondere die Seitenbelastungen beim Fräsvorgang ausschlaggebend sind.

Besonders vorteilhaft wird die Fräsung durchgeführt, wenn die insbesondere stegartigen Verbindungen in einer Ebene, bevorzugt parallel zur Oberfläche des Grundkörpers liegen.

Die Erfindung wird anhand der folgenden Figuren näher erläutert.

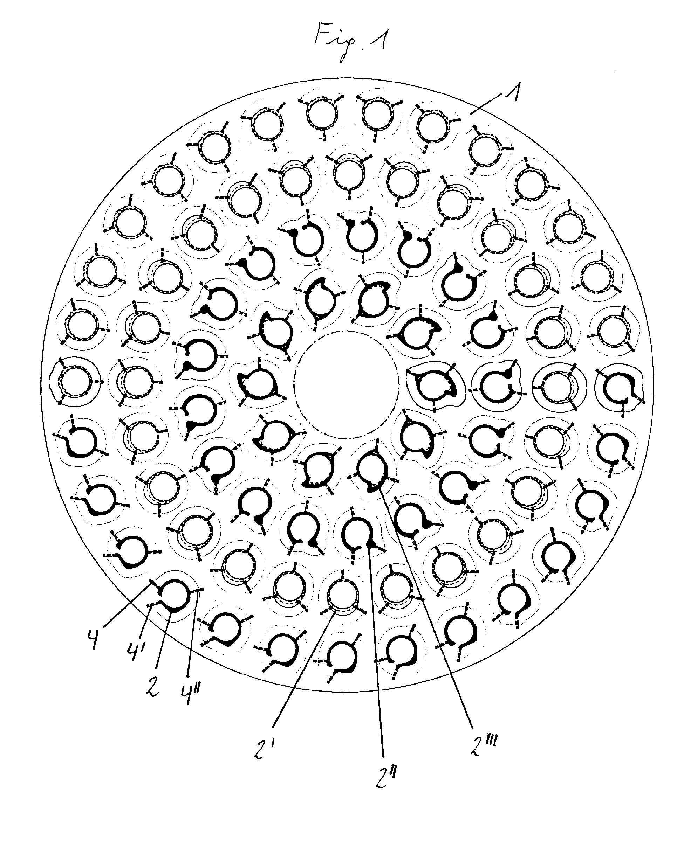

Fig. 1 zeigt den metallischen Grundkörper 1 in Aufsicht, aus dem eine Vielzahl von freiformflächigen Schmuckteilen 2, 2', 2", 2''' soweit aus dem Grundkörper 1 herausgefräst sind, dass jeweils drei stegartige Verbindungen 4, 4', 4'' zwischen den Schmuckteilen 2, 2', 2'', 2''' und dem Grundkörper 1 verbleiben.

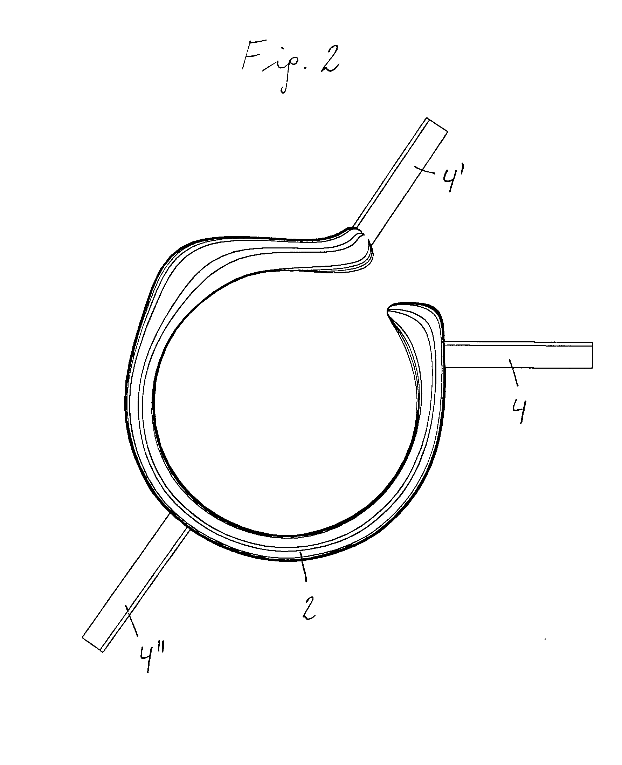

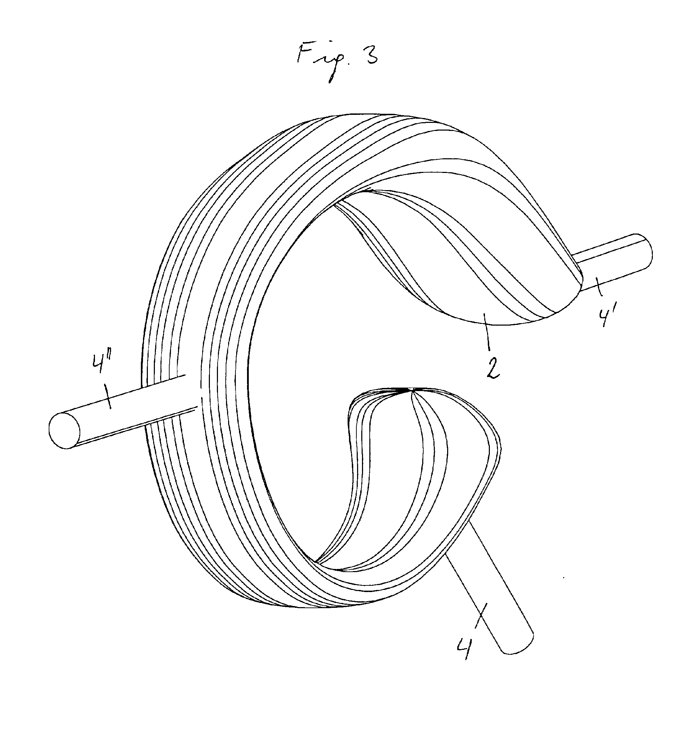

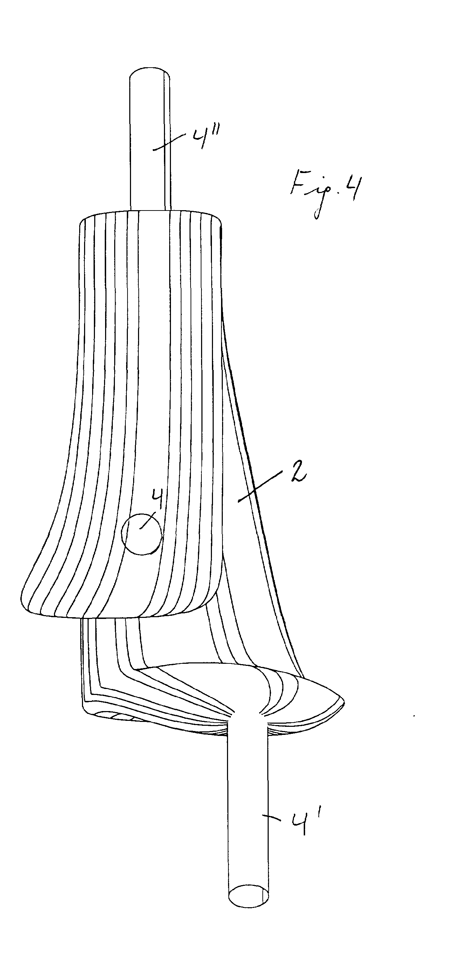

Fig. 2 zeigt in vergrößerter Darstellung den Schmuckteil 2 mit den Verbindungen 4, 4', 4" unmittelbar nach seiner Ausbringung aus dem Grundkörper 1. Die räumliche Gestalt des Schmuckteiles 2 wird durch annähernd parallele Linien angedeutet. In den Fig. 3 und 4 ist der Schmuckteil aus Fig. 2 jeweils aus anderen Perspektiven dargestellt.

## Patentansprüche

1. Verfahren zur Herstellung eines freiformflächigen Schmuckteiles aus einem metallischen Grundkörper mittels Fräsverfahren, **dadurch gekennzeichnet, dass** der metallische Grundkörper eingespannt wird und die gewünschte Form des Schmuckteiles mittels Fräskopf soweit herausgearbeitet wird, dass mindestens eine Verbindung zum Grundkörper erhalten bleibt, dass der Schmuckteil anschließend aus dem Grundkörper ausgebracht wird und die getrennte Verbindung zum Grundkörper in weiterer Folge mittels bekannter Maßnahmen entfernt wird.

2. Verfahren nach Anspruch 1, **dadurch gekennzeichnet, dass** der freiformflächige Körper mittels CAD-CAM Programm konstruiert und die NC-Daten direkt von der Fräsmaschine übernommen werden.

3. Verfahren nach Anspruch 1 oder 2, **dadurch gekennzeichnet, dass** das Schmuckteil durch HSC-Fräsung aus dem Grundkörper herausgearbeitet wird.

4. Verfahren nach Anspruch 1, 2 oder 3, **dadurch gekennzeichnet, dass** die Fräsung mittels einer Emulsionskühlung, bevorzugt mittels einer Minderschmiermengenkühlung durchgeführt wird.

5. Verfahren nach einem der Ansprüche 1 bis 4, **dadurch gekennzeichnet, dass** gleichzeitig aus demselben Grundkörper eine Vielzahl von Schmuckteilen herausgearbeitet werden und die Menge an Abfallprodukt rechnergesteuert optimiert wird.

6. Verfahren nach einem der Ansprüche 1 bis 5, **dadurch gekennzeichnet, dass** die Form des Schmuckteiles halbseitig aus dem Grundkörper herausgearbeitet, der Grundkörper anschließend um 180 ° gedreht und dann die zweite Halbseite herausgearbeitet wird.

7. Verfahren nach einem der Ansprüche 1 bis 6, **dadurch gekennzeichnet, dass** ein Grundkörper eingesetzt wird, der aus Edelstahl besteht, welcher 0,14% Kohlenstoff, 0,40% Silizium, 1,40% Mangan, 0,30% Schwefel, 16% Crom und 0,25% Molybdän enthält.

8. Verfahren nach einem der Ansprüche 1 bis 7, **dadurch gekennzeichnet, dass** die Verbindung als Wulst ausgebildet ist.

9. Verfahren nach einem der Ansprüche 1 bis 7, **dadurch gekennzeichnet, dass** mindestens zwei, bevorzugt drei oder mehr insbesondere stegartige Verbindungen zwischen dem Schmuckteil und dem Grundkörper verbleiben.

10. Verfahren nach einem der Ansprüche 1 bis 9, **dadurch gekennzeichnet, dass** die Verbindungen in beliebiger Art geometrisch ausgebildet sind.

11. Verfahren nach einem der Ansprüche 1 bis 10, **dadurch gekennzeichnet, dass** die Verbindungen in einer Ebene, bevorzugt parallel zur Oberfläche des Grundkörpers liegen.
